# EUROPEAN PATENT SPECIFICATION

(11) **EP 0 396 004 B1**
(45) Date of publication and mention of the grant of the patent: **10.09.1997**
(21) Application number: 90107787.5
(22) Date of filing: 24.04.1990
(51) Int. Cl.: G06K 7/10

(54) **Laser scanning system for reading bar codes**
Laser-Abtastsystem zum Lesen von Strichkodierungen
Système de balayage laser pour lecture de code à barre

(30) Priority: 01.05.1989 US 345881
(43) Date of publication of application: 07.11.1990
(60) Divisional application: 96120633.1
(73) Proprietor: SYMBOL TECHNOLOGIES, INC., Bohemia New York 11716-3300 (US)
(72) Inventor: Siemiatkowski, Bish, Los Gatos, CA 95030 (US)
(74) Representative: Wagner, Karl H., Dipl.-Ing.

(56) References cited:
- EP-A- 0 194 115
- EP-A- 0 262 943
- FR-A- 2 566 572
- US-A- 4 072 859
- US-A- 4 639 606
- US-A- 4 766 297

## Description

### 1. Field of the Invention

This invention generally relates to laser scanning systems for reading bar code symbols or similar indicia and, more particularly, to an arrangement including a hand-held laser scanning unit for generating a laser beam scan pattern over the symbols to be read, and a terminal unit for receiving data transferred from the scanning unit.

### 2. Description of the Related Art

Various optical readers and optical scanning systems have been developed heretofore for reading bar code symbols appearing on a label or on the surface of an article. The bar code symbol itself is a coded pattern of indicia comprised of a series of bars of various widths spaced apart from one another to bound spaces of various widths, the bars and spaces having different light-reflecting characteristics. A number of different bar code standards or symbologies exist. These symbologies include UPC/EAN, Code 128, Codabar, and Interleaved 2 of 5. The readers and scanning systems electro-optically decode the symbol to multiple alphanumerical characters that are intended to be descriptive of the article or some characteristic thereof. Such characters are typically represented in digital form as an input to a data processing system for applications in point-of-sale processing, inventory control, and the like. Scanning systems of this general type have been disclosed, for example, in U.S. Patent Nos. 4,251,798; 4,360,798; 4,369,361; 4,387,297; 4,409,470 and 4,460,120, all of which have been assigned to the same assignee as the instant application.

From US-8-4,766,297, used to delimit claim 1, a scanning system for reading bar code symbols including a portable hand-held scanning device is known. The scanning system further includes a fixture for receiving and supporting the portable hand-held scanning device. The fixture further includes a structure for sensing the presence of an object between its head portion and its base portion for automatically initiating reading by the portable hand-held scanning device.

From EP-0 194 115 a portable laser diode scanning head is known that is aimable at each symbol to be read and equipped with a trigger-activated aiming light arrangement for visually locating and tracking each symbol.

FR-2566572 discloses a connection member for a wireless connection. A transmission of information is provided by transmitting modulated signals using infrared diodes. The radiation emitted by said diodes is received by phototransistors.

EP-A-0 364 676 constitutes prior art according to Art. 54(3).

As disclosed in some of the above patents, one embodiment of such a scanning system resides, inter alia, in an emitting a laser light beam from a hand-held, portable laser scanning head supported by a user, and aiming the head, and more particularly, the laser light beam, at a symbol to be read. The scanner functions by repetitively scanning the laser beam in a line across the symbol. A portion of the reflected laser light which is reflected off the symbol is detected, and electronic circuitry or software decodes the electrical signal into a digital representation of the data represented by the symbol scanned.

More specifically, a scanner includes a light source such as a gas laser or semiconductor laser that generates a light beam. The use of a semiconductor devices as the light source in scanner systems is especially desirable because of their small size, low cost and low power requirements. The light beam is optically modified, typically by a lens, to form a beam spot of a certain size. It is preferred that the beam spot size be approximately the same as the minimum width between regions of different light reflectivity, i.e., the bars and spaces of the symbol. The relative size of the bars and spaces is determined by the type of coding used, as is the actual size of the bars and spaces. The number of characters per inch represented by the bar code symbol is referred to as the density of the symbol.

The light beam is directed by the lens of similar optical components along a light path toward a target that includes a bar code symbol on the surface. A scanning component is also disposed in the light path. The scanning component may either sweep the beam spot across the symbol and trace a scan line across and past the symbol, or scan the field of view of the scanner or do both. A scanner also includes a sensor or photodetector. The photodetector has a field of view which extends across and slightly past the symbol and functions to detect light reflected from the symbol. The analog electrical signal from the photodetector is first typically converted into a pulse width modulated digital signal, with the widths corresponding to the physical widths of the bars and spaces. Such a signal is then decoded according to the specific symbology into a binary representation of the data encoded in the symbol, and to the alphanumeric characters so represented.

Laser scanners are not the only type of optical instrument capable of reading bar code symbols. Another type of optical reader is none which is operative being placed by the user in direct contact with the symbol to be read. Such readers typically incorporate detectors based upon charge coupled device (CCD) technology in which the size of the detector is larger than or substantially the same as the symbol to be read. Such scanners are lightweight and easy to use, but require substantially direct contact or placement of the reader on the symbol to enable the symbol to read. Such contact reading is a preferred mode of operation for some applications or as a matter of personal preference by the user. Contact or near contact reading may also be implemented in an appropriately designed laser scanner.

The present invention relates to a system for reading symbols as referred to in claim 1.

Preferred embodiments are disclosed in the dependent claims.

### SUMMARY OF INVENTION

Briefly, and in general terms, the present invention provides a system for reading bar code symbols or the like, including a hand-held scanning unit in a lightweight, portable housing including symbol-detection means for generating a laser beam directed toward a symbol to be read, and for receiving reflected flight from such symbol to produce electrical signals corresponding to data represented by the symbol. A data transfer device is provided for transferring the data represented by the symbol externally of the scanning unit. A read-control device is provided to actuate the symbol-detection means to initiate reading of a symbol. A rechargeable power supply is also provided for supplying electrical power to the scanning unit.

The system also includes a terminal unit operable remotely from the scanner unit that includes a data input for receiving the data transferred from the data transfer device of the scanning unit. The terminal unit functions to display and store the data transferred from the scanning unit, and also functions to recharge the rechargeable power supply of the scanning unit when said scanning unit is placed in proximity to the terminal unit.

The invention generally relates to laser scanner systems for reading indicia of different light reflectivity such as bar code symbols. More particularly, the present invention provides a system for reading symbols, including a portable scanner operative in a hand-held mode supported by a user for reading symbols, and in a fixed station mode in which the scanner is coupled to a terminal.

According to one embodiment of the invention, a laser-scan bar code reader is mounted in a hand-held unit operable in two modes. In one mode the hand-held unit is mounted in a fixed position in a terminal, in which case the data generated from the bar code reading operation is transferred immediately to the terminal and the reader is powered continuously from the terminal unit. In the other mode, the hand-held unit is separated from the terminal and held manually, in which case the data from bar code reading is stored in a local memory to be later transferred to the terminal when the hand-held unit is again inserted into the terminal. A battery in the hand-held unit is charged when the unit is mounted in the terminal, then powers the hand-held unit while operating remote from the terminal. The power for battery charging and the data transfer are accomplished without direct connections between the hand-held unit and the terminal.

The laser scanner in the present invention in the workstation mode is operable in two power levels. When in the stationary mode, inserted in the fixed terminal, the scanner is in a low level, short scan condition, in which case it can recognize a bar code symbol but cannot properly decode it; when a bar code is recognized the unit switches to the higher level condition whereby the scan line is longer and the laser power level is higher so a full decode is possible.

### BRIEF DESCRIPTION OF THE DRAWINGS

The novel features characteristic of the invention are set forth in the appended claims. The invention itself, however, as well as other features and advantages thereof, will be best understood by reference to a detailed description of a specific embodiment, when read in conjunction with the accompanying drawings, wherein:
Fig. 1a is a perspective view of a hand-held laser scanner unit coupled to the terminal unit in accordance with one embodiment of this invention, and diagrammatically illustrating a low power scan pattern;
Fig. 1b is a perspective view of the hand-held laser scanner unit of Figure 1a, coupled to the terminal unit in accordance with one embodiment of this invention, and diagrammatically illustrating a high power scan pattern;
Fig. 2 is a perspective view of the hand-held laser scanner unit of Figures 1a and 1b used remotely from the terminal unit in accordance with this invention;
Fig. 3 is a diagrammatic cut-away illustration of the hand-held laser scanner according to the embodiment of the present invention of Figure 2; and
Fig. 4 is an electrical diagram in block form of the hand-held laser scanner and the associated terminal according to one embodiment of the present invention.

### DETAILED DESCRIPTION OF SPECIFIC EMBODIMENT

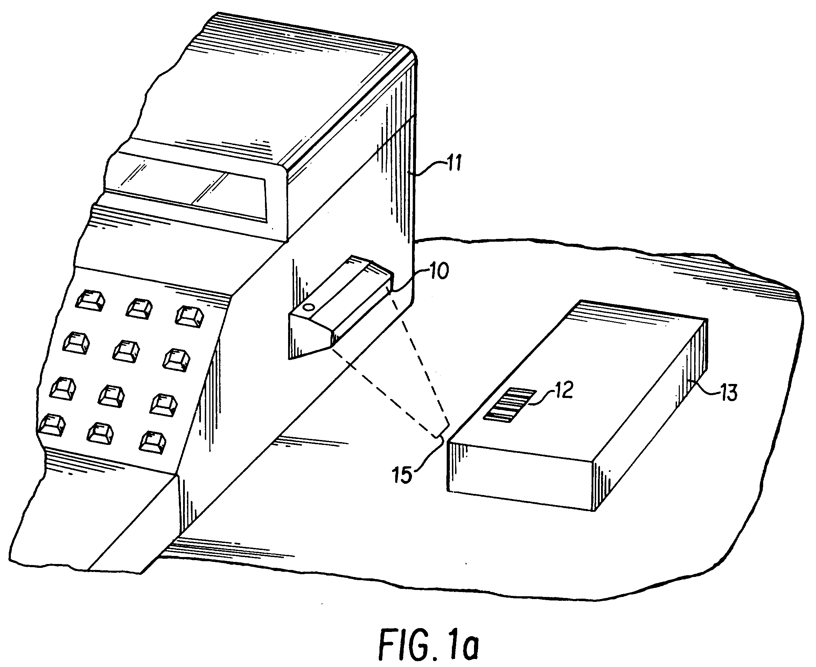

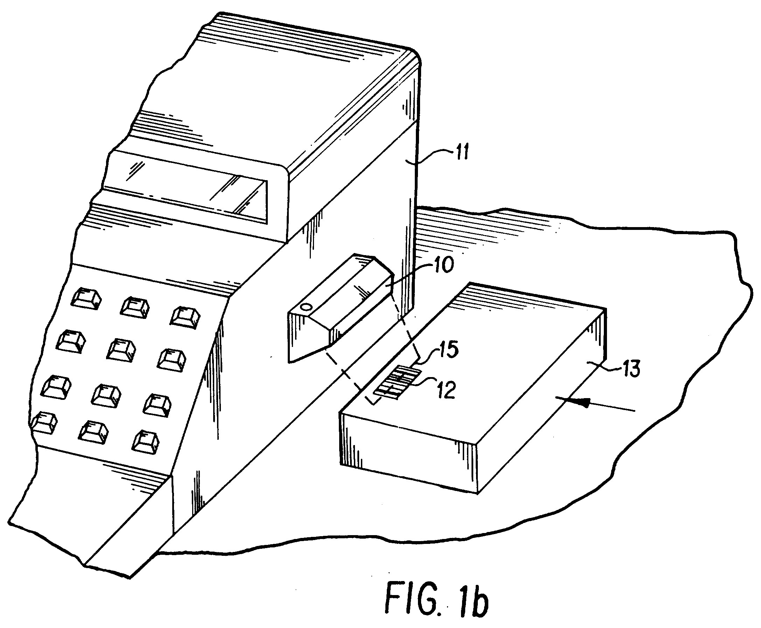

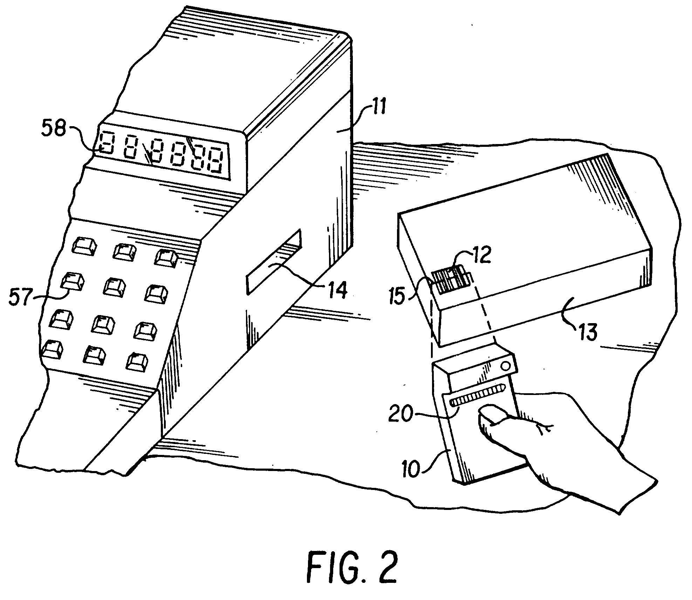

A bar code scanner according to one embodiment of the invention is illustrated in Figures 1a and 1b, where a removable hand-held scanner 10 is shown inserted in a terminal 11 for reading a bar code 12 on the surface of an article 13. The scanner 10 is constructed so that it has two modes of operation, one where it is inserted in a slot 14 in the terminal 11, and another where the scanner 10 is removed from the slot 14 and held by hand as illustrated in Figure 2. Further, while the scanner 10 is in the mode of Figures 1a and 1b, the laser scan has a low-power scanning mode in which the scan line 15 is short (and therefore brighter) and the current driving the laser is reduced, as in the Figure 1a condition. When an object resembling a bar code is moved into the field of the scan as illustrated in Figure 1b, the signal detected is adequate to be recognized as a bar-code type output, and this output is used to trigger a switch to the high-power mode wherein the drive to the laser is increased and the scan line 15 is made longer, so that a complete scan and decode can be done rapidly. By using this dual-mode scan, the lifetime of the laser diode used to generate the laser scan line 15 is increased, as the laser will be driven at a low-power condition for most of its operating life.

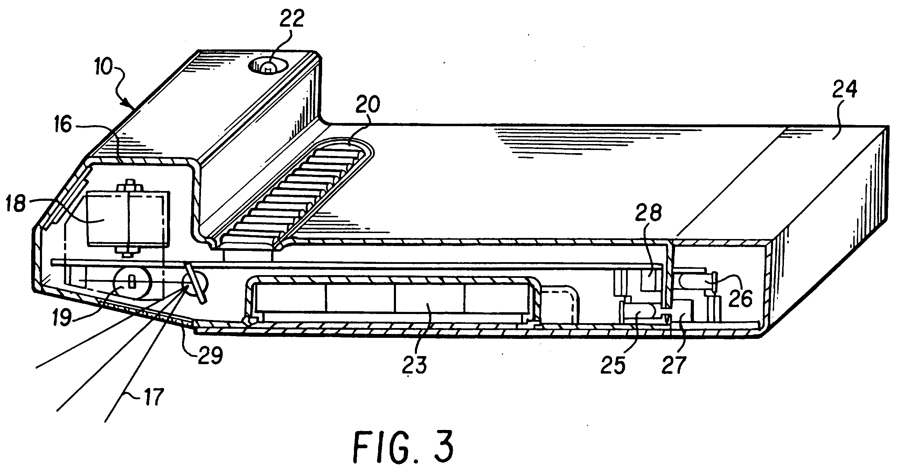

The portable scanner 10 is shown in cut-away view in Fig. 3 and includes a housing 16 with a mechanism in the housing for generating a light beam 17 and transmitting the light beam toward each symbol to be read; in a preferred embodiment, a motor 18 is used to oscillate an optical element 19 which directs the path of a laser beam. Also, a photodetector element is included for receiving reflected light from a symbol 12. While in the hand-held operating mode of Figure 2, the scan is activated by a pushbutton switch 20 (trigger bar) located on the upper part of the housing 16, so there is no need for the dual power level mode of operation to save laser life. That is, when the pushbutton switch 20 is pressed by the operator, the laser scan is initiated at full power to generate a scan line 15 to traverse the bar code symbol 12 to be read. If a recognizable bar code is decoded by the electrical circuitry as will be described, an indicator light 22 is activated to signify to the user that the scan was successful. The housing 16 contains batteries 23 for powering the unit when in the hand-held mode, and these batteries are preferably of the miniature rechargeable lead-acid type which are commercially available; to avoid the necessity for plug-in connectors, this same power supply is used to power the hand-held unit even when it is in the stationary position in the slot 14. The batteries are recharged when the unit 10 is plugged into the terminal 11 by an open-frame transformer, so there are no wired connections between the hand-held unit and a fixed coupler 24 located at the back of the slot 14 to receive the unit 10. That is, the coupler 24 is not part of the unit 10 removed from the fixed terminal 11. Light coupling is used to transfer signals and data between the unit 10 and the terminal 11, and for this purpose two pairs of semiconductor optical couplers are included, consisting of light-emitting diodes 25 and 26 and light-responsive transistors 27 and 28. The housing 16 is composed of light-weight plastic, and has a window 29 which is transparent to the laser light beam 17.

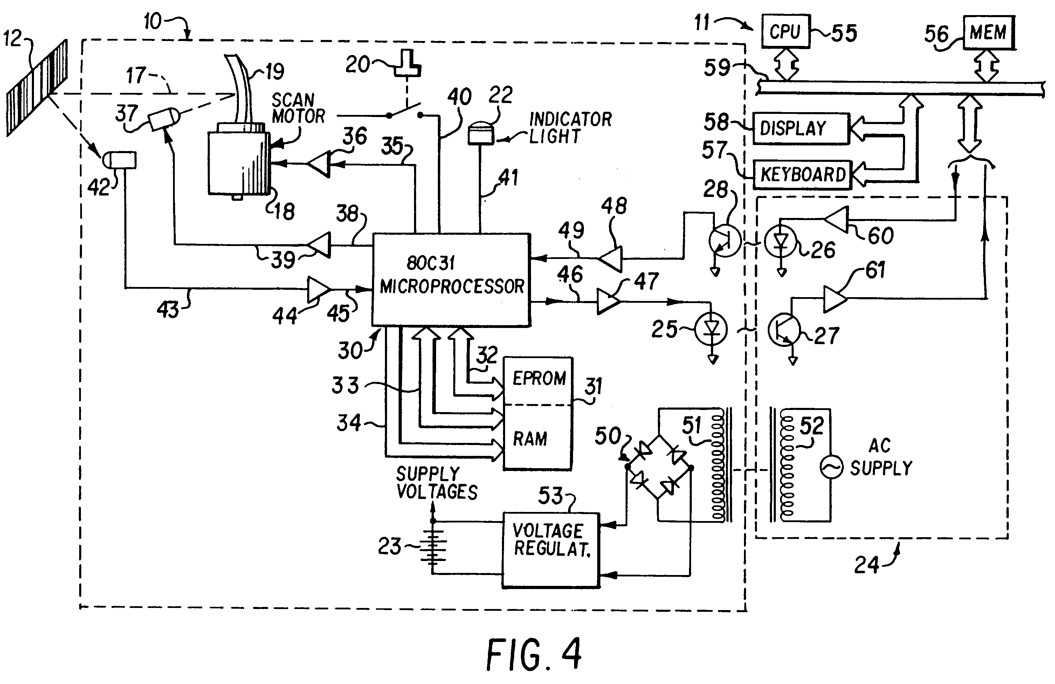

Referring to Figure 4, the circuitry included within the housing 16 of the hand-held unit 10 is shown in block diagram form. The control and data handling functions are provided by a microprocessor or microcontroller device 30 which may be, in a preferred embodiment, a 80C31 microcontroller chip manufactured by Intel. This 80C31 device is a low-power CMOS 8-bit processor containing 128-bytes of on-chip RAM, two 16-bit timer-counters, and having four 8-bit general-purpose I/O ports (32-bit I/O) which are used for accessing an off-chip memory 31. The off-chip memory 31 includes EPROM for holding the code to be executed, and RAM for temporarily storing the bar code data before the data is transferred to the terminal 11. The off-chip memory 31 is accessed by an address bus 32 and a data bus 33, along with control lines 34 for read/write and data-enable controls as may be required; these access busses are provided by the I/O ports of the microcontroller chip 30. Examples of instruction code to be stored in the EPROM for defining the operation of the controller chip are available from the manufacturer of the 80C31 device, and would include standard data-move routines for parallel and serial ports, and timer routines.

The scan motor 18 is activated by an output 35 from the microcontroller 30 and a drive circuit 36. Likewise, the laser diode 37 for generating the beam 17 is activated under control of the microcontroller 30 at an output 38, using a drive circuit 39 to increase the power level. The trigger bar or pushbutton switch 20 provides an input 40 to the microcontroller 30, and an output 41 is used to drive the indicator light 22. Each of these inputs and outputs 35, 38, 40 and 41 is provided by one of the lines of the 32-bit I/O of the microcontroller, accessed by set-bit or test-bit instructions of the code which is executed. Thus, when the pushbutton 20 is activated, this is detected by the microcontroller 30 and the laser diode 37 is energized for a time period established by the internal timer counters of the microcontroller chip; at the same time, the scanner motor 20 is activated.

Light reflected from the bar code symbol 12 is detected by a photodetector 42 to produce an analog signal on line 43 related to light level, and this analog signal is amplified and clipped by a shaping circuit 44 to produce a pulse-width modulated digital signal on line 45 which is another of the port inputs to the microcontroller 30. The digital signal is stored in internal RAM and processed to determine whether or not a recognizable bar code is present, and if so, the start and stop codes usually present are found in the digital signal and the characters are separated out and stored in the RAM portion of the memory 31.

To transfer data and commands to and from the terminal 11, the hand-held unit 10 contains the light-emitting diode 25 and light-responsive transistor 28 as mentioned above. The diode 25 is activated by an output 46 from the microcontroller 30 along with a drive circuit 47 which increases the power level of the drive signal. Thus, data from the memory 31 representing valid bar code characters detected by the scan operation is transferred to the terminal 11 by digital pulses generated in the microcontroller 30 and applied to the output port line 46. Input signals from the phototransistor 28 are shaped in circuitry 48 and applied as digital data to an input port line 49 to the microcontroller 30. In this manner, when the hand-held unit 10 is plugged into the slot 14 of the terminal 11, the microcontroller 30 can detect that the unit is in the mode of Figures 1a and 1b by command signals from the terminal 11 via phototransistor 28 and input 49, and so the microcontroller 30 will enter a routine whereby any data collected by bar code scans and stored in the memory 31 will be transferred to the terminal 11 via output 46 and light-emitting diode 25. Thereafter, so long as the hand-held unit stays in the slot 14, the microcontroller monitors the "stationary" command received at input 49 and goes into the two-level scan mode described above, and disables the pushbutton switch 20. Whenever the "stationary" command is no longer received at input 49, this means the hand-held unit 10 is no longer in the slot 14, so the microcontroller 30 returns to the mode whereby the pushbutton switch 20 must be pushed to begin a scan.

The batteries 23 are charged by a full-wave bridge rectifier 50 which has its input connected to a secondary winding 51 of a transformer which is open-frame coupled to a primary winding 52 located in the fixed-mounted unit 24 of the terminal 11. That is, the primary and secondary of this transformer are located close enough together when the hand-held unit 11 is in the slot 14 so that sufficient coupling is provided to transfer AC power to the secondary winding 51. The output of the rectifier 50 is connected by a voltage regulator 53 to the batteries 23, and the voltage across the batteries is used as the supply voltage to the microcontroller 30, memory 31, motor 18 and other elements of the circuitry within the hand-held unit.

Within the terminal 11, a processor 55, which may be of the 8088 type, for example, is used to control the operations and data transfers to and from a memory 56. The keyboard 57 and display 58 of the fixed terminal are also driven by this processor. The light-emitting diode 26 and the phototransistor 27 are driven or accessed by the main bus 59 of the processor 55 via shaping or drive circuits 60 and 61, using memory-mapped I/O accesses, for example.

While this invention has been described with reference to a specific embodiment, this description is not meant to be construed in a limiting sense. Various modifications of the disclosed embodiment, as well as other embodiments of the invention, will be apparent to persons skilled in the art upon reference to this description.

## Claims

1. A system for reading bar code symbols (12) or the like, including:
a hand-held scanning unit (10) in a lightweight, portable housing including symbol-detection means (18, 19, 37, 42) for generating a laser beam (17) directed towards a symbol (12) to be read, and for receiving reflected light from such symbol (12) to produce electrical signals (43) corresponding to data represented by the symbol (12), a data transfer device (51) for transferring the data represented by the symbol (12) externally of the scanning unit (10), a read-control device (20) for actuating the symbol-detection means (18, 19, 37, 42) to initiate reading of a symbol (12); and
a terminal unit (11) operable remotely from the scanning unit (10) including a data input means for receiving the data transferred from the data transfer device of the scanning unit (10) characterized in that
said scanning unit can be physically disconnected from said terminal unit; and in that it includes a power supply (23) for supplying electrical power to the scanning unit; and in that
said system is operable for reading symbols either in a first mode in which said portable scanning unit (10) is supported by a user in a hand-held mode and there is no physical connection to the terminal unit or in a second fixed station mode in which said scanning unit (10) is directly mounted in a fixed position relative to and is physically connected to said terminal unit (11).

2. A system as defined in claim 1, wherein said power supply (23) is rechargeable.

3. A system as defined in claim 1 or 2, wherein said terminal unit (11) includes means for displaying and storing the data transferred from said scanning unit and means for recharging said rechargeable power supply (23) of said scanning unit (10) when said scanning unit (10) is placed in proximity to said terminal unit (11).

4. A system as defined in any of claims 1 - 3 wherein said symbol-detection means includes scanning means for repetitively scanning said laser beam (17) over at least a portion of a symbol (12) to be read.

5. A system as defined in claim 4 wherein said symbol-detection means includes photodetector means (42) for detecting at least a portion of the light variable intensity of each scanned laser beam (17) reflected from each symbol (12).

6. A system as defined in claim 5 wherein said read-control means includes means responsive to successful recognition of a symbol (12) to be read to terminate actuation of the symbol-detection means.

7. A system as defined in claim 1 or 3, wherein said scanning unit (10) further includes means for storing said data representing symbols (12) read.

8. A system as defined in claim 1 or 3, wherein said read-control means comprises a switch (20) on the housing for initiating reading of each symbol (12) upon each manual actuation of the switch (20) by the user.

9. A system as defined by claim 1 or 3, wherein said read-control means includes means for indicating a successful decoding of a symbol (12) to be read.

10. A system as defined in claim 1 or 3, wherein said terminal unit (11) includes a housing having a rectangular slot (14) that is adapted to receive said scanning unit (10), said housing having a seating portion in the interior end portion of said scanning unit (10), said first end portion including said data transferred by said scanning unit (10).

11. A system as defined in claim 10, wherein said terminal unit (11) comprises object sensor means to detect when an object bearing a bar code label (12) is moved into the field of view of said symbol-detection means of said scanning unit (10) when said scanning unit (10) is seated in paid rectangular slot (14).

12. A system as defined in claim 1 or 3, wherein said terminal unit (11) includes a housing having a slot (14) adapted to receive said scanning unit (10), and means in said slot (14) for transferring data to or from said scanning unit (10).

13. A system according to claim 12, including means in said slot (14) for transferring power to said scanning unit (10) for charging a battery (23) in said scanning unit (10).

14. A system as defined in any of the preceeding claims, wherein said terminal unit (11) includes means for activating said read-control means of said scanning unit (10) when said scanning unit (10) is placed in proximity to said terminal unit (11).

15. A system as defined in claim 14, wherein said first scanning mode is a low power standby mode and said second scanning mode is high power reading mode.

16. A system as defined in claim 15, wherein in said first scanning mode said laser beam (17) traces a scanning line having a first length in a reference plane lying generally normal to the optical path of said laser beam (17), and in said second scanning mode said laser beam (17) traces a scanning line having a second length greater than said first length.

17. A system as defined in claim 14, wherein said data transfer means provides wireless transmission of data to said terminal unit (11).

18. A system as defined in claim 14, wherein said read control means is activated when an object having a reflected light characteristic that could be indicative of the presence of a symbol (12) is detected.

19. A system as defined in any of the preceeding claims, wherein said portable scanning unit (10) is operative in a hand-held mode supported by a user for reading symbols (12), and in data transfer mode, said scanning unit (10) including local data storage (31) in said housing means for storing the data and/or means for initiating the reading of each symbol (12).

20. A system as defined in claim 19, wherein said terminal unit (11) located remotely from said scanning unit (10) when said scanning unit (10) is used in said hand-held mode, and coupled to and supporting said scanning unit (10) when the scanning unit (10) is in said data transfer mode, and includes:
(i) a main data storage means (56), and/or
(ii) actuatable recharge means for recharging the rechargeable power supply (23); and/or
(iii) means for receiving and supporting said scanning unit (10) on the terminal unit (11) in said data transfer mode, said receiving and supporting means including
data transfer means for transferring the data stored in the local data storage means to the main data storage means in the terminal unit (11), and
means for actuating the recharge means and supplying power to recharge the rechargeable power supply (23) in said scanning unit (10).

21. A system as defined in claim 19 or 20, wherein said means for actuating the recharge means is responsive to said scanning unit (10) being mounted on the terminal unit (11).

22. A system as defined in claim 19 or 20, wherein said recharge means comprises an induction coil (52) for transferring power to said scanning unit (10) by induction.

23. A system as defined in claim 19 or 20, wherein said data transfer means comprises a light emitting diode for wireless transmission of the data to said main data storage means (56).

24. A system as defined in claim 19 or 20, wherein said terminal unit (11) includes a base portion on which said terminal unit (11) is seated, and said means for receiving and supporting the scanning unit (10) functions to direct the light beam emitted from said scanning unit (10) in the data transfer mode to a reference plane adjacent to said base portion.

## Patentansprüche

1. Ein System zum Lesen von Strichcodesymbolen (12) oder dergleichen, wobei folgendes vorgesehen ist:
eine in der Hand zu haltende Abtasteinheit (10) in einem leichten, tragbaren Gehäuse einschließlich Symboldetektiermitteln (18, 19, 37, 42) zur Erzeugung eines Laserstrahls (17), der auf ein zu lesendes Symbol (12) gerichtet ist, und zum Empfang von reflektiertem Licht von einem solchen Symbol (12) zur Erzeugung elektrischer Signale (43), die den durch das Symbol (12) repräsentierten Daten entsprechen, eine Datenübertragungsvorrichtung (51) zum Übertragen der durch das Symbol (12) repräsentierten Daten nach außerhalb gegenüber der Abtasteinheit (10), eine Lesesteuervorrichtung (20) zur Betätigung der Symboldetektiermittel (18, 19, 37, 42) zur Initiierung des Lesens eines Symbols (12), und
eine Geräteeinheit (Terminal) (11), die von der Abtasteinheit (10) fernbetätigbar ist und Dateneingangsmittel aufweist, zum Empfang der von der Datentransferübertragungsvorrichtung der Abtasteinheit übertragenen Daten, dadurch gekennzeichnet, daß die Abtasteinheit körperlich (physikalisch) von der Geräteeinheit abgetrennt werden kann; und
daß sie eine Leistungsversorgung (23) zur Lieferung von elektrischer Leistung an die Abtasteinheit aufweist; und
daß das System betreibbar ist zum Lesen von Symbolen entweder in einer ersten Betriebsart, in der die erwähnte tragbare Abtasteinheit (10) durch den Benützer in eine Handhaltebetriebsart getragen ist und keine körperliche Verbindung mit der Geräteeinheit besteht, oder in einer zweiten Feststationsbetriebsart, in der die Abtasteinheit (10) direkt in einer festen Position relativ zu und körperlich verbunden mit der Anschlußeinheit (11) angeordnet ist.

2. System nach Anspruch 1, wobei die Leistungsversorgung (23) wieder aufladbar ist.

3. System nach Anspruch 1 oder 2, wobei die Geräteeinheit (11) Mittel aufweist zum Anzeigen und Speichern der von der Abtasteinheit übertragenen Daten und Mittel zum Wiederaufladen der wiederaufladbaren Leistungsversorgung (23) der Abtasteinheit (10) dann, wenn die Abtasteinheit (10) in der Nähe der Geräteeinheit (11) angeordnet ist.

4. System nach einem der Ansprüche 1 bis 3, wobei die Symboldetektiermittel Abtastmittel aufweisen, zum wiederholten Tasten des Laserstrahls (17) über mindestens einen Teil des zu lesenden Symbols (12).

5. System nach Anspruch 4, wobei die Symboldetektiermittel Photodetektiermittel (42) aufweisen, zum Detektieren von mindestens einem Teil der lichtvariablen Intensität jedes von jedem Symbol (12) reflektierten abgetasteten Laserstrahls (17).

6. System nach Anspruch 5, wobei die Lesesteuermittel Mittel aufweisen, die auf die erfolgreiche Erkennung eines zu lesenden Symbols (12) ansprechen, um die Betätigung der Symboldetektionsmittel zu beenden.

7. System nach Anspruch 1 oder 3, wobei die Abtasteinheit (10) ferner Mittel zum Speichern der gelesenen Symbole (12) repräsentierenden Daten aufweist.

8. System nach Anspruch 1 oder 3, wobei die Lesesteuermittel einen Schalter (20) am Gehäuse aufweisen zum Einleiten des Lesens jedes Symbols (12) bei manueller Betätigung des Schalters (20) durch den Benutzer.

9. System nach Anspruch 1 oder 3, wobei die Lesesteuermittel Mittel aufweisen, zum Anzeigen einer erfolgreichen Dekodierung eines zu lesenden Symbols (12).

10. System nach Anspruch 1 oder 3, wobei die Geräte- oder Anschlußeinheit (11) ein Gehäuse aufweist, und zwar mit einem rechteckigen Schlitz (14), der geeignet ist, die Abtasteinheit (10) aufzunehmen, wobei das Gehäuse einen Sitzteil im inneren Endteil der Abtasteinheit (10) aufweist, wobei der erste Endteil die durch die Abtasteinheit (10) übertragenen Daten einschließt.

11. System nach Anspruch 10, wobei die Geräteeinheit (11) Objektsensormittel aufweist um zu Detektieren, wenn ein ein Strichcodeetikett (12) traqendes Objekt in das Gesichtsfeld der Symboldetektionsmittel der Abtasteinheit (10) bewegt wird, wenn die Abtasteinheit (10) in dem erwähnten rechteckigen Schlitz (14) sitzt.

12. System nach Anspruch 1 oder 3, wobei die Geräteeinheit (11) ein Gehäuse mit einem Schlitz (14) geeignet zur Aufnahme der Abtasteinheit (10) aufweist und Mittel im Schlitz (14) zur Übertragung von Daten zu oder von der Abtasteinheit (10).

13. System nach Anspruch 12 mit Mitteln in dem Schlitz (14) zur Übertragung von Leistung zu der Abtasteinheit (10) zum Aufladen einer Batterie (23) in der Abtasteinheit (10).

14. System nach einem der vorherigen Ansprüche, wobei die Geräteeinheit (11) Mittel aufweist, zum Aktivieren der Lesesteuermittel der Abtasteinheit (10), wenn die Abtasteinheit (10) in der Nähe der Geräteeinheit (11) plaziert ist.

15. System nach Anspruch 14, wobei die erste Abtastbetriebsart eine Stand-by Betriebsart mit geringer Leistung ist, wobei die zweite Abtastbetriebsart eine Lesebetriebsart mit hoher Leistung ist.

16. System nach Anspruch 15, wobei in der ersten Abtastbetriebsart der Laserstrahl (17) eine Abtastlinie durchläuft oder verfolgt mit einer ersten Länge in einer Bezugsebene im ganzen normal zum optischen Pfad des Laserstrahls (17) liegend, und wobei der Laserstrahl (17) in der erwähnten zweiten Abtastbetriebsart eine Abtastlinie durchläuft, die eine zweite Länge größer als die erste Länge aufweist.

17. System nach Anspruch 14, wobei die Datentransfermittel eine drahtlose Übertragung der Daten zur Geräteeinheit (11) vorsehen.

18. System nach Anspruch 14, wobei die Lesesteuermittel dann aktiviert werden, wenn ein Objekt eine Reflexionslichtcharakteristik besitzt, die das Vorhandensein eines detektierten Symbols (12) anzeigt.

19. System nach einem der vorhergehenden Ansprüche, wobei die tragbare Abtasteinheit in einer Handhaltebetriebsart getragen durch einen Benützer zum Lesen von Symbolen (12) betrieben werden kann und in einer Datenübertragungsbetriebsart, wobei die Abtasteinheit (10) folgendes aufweist: einen örtlichen Datenspeicher (31) in den Gehäusemitteln zum Speichern der Daten und/oder Mittel zum Initiieren des Lesens jedes Symbols (12).

20. System nach Anspruch 19, wobei die Geräteeinheit (11) entfernt von der Abtasteinheit (10) angeordnet ist, wenn die Abtasteinheit (10) in der Handhaltebetriebsart verwendet wird, und wobei die Geräteeinheit (11) mit der Abtasteinheit (10) gekuppelt ist und diese trägt, wenn die Abtasteinheit (10) sich in der Datentransferübertragungsbetriebsart befindet, und wobei diese folgendes aufweist:
1. Hauptdatenspeichermittel (56), und/oder
2. betätigbare Wiederauflademittel zum Wiederaufladen der wiederaufladbaren Leistungsversorgung (23); und/oder
3. Mittel zur Aufnahme und zum Tragen der Abtasteinheit (10) an der Geräteeinheit (11) in der Datenübertragungsbetriebsart, wobei die Aufnahme- und Tragmittel folgendes aufweisen: Datenübertragungsmittel zum Übertraqen der in den örtlichen Datenspeichermitteln gespeicherten Daten an die Hauptdatenspeichermittel in der Geräteeinheit (11), und Mittel zur Betätigung der Wiederauflademittel und zur Lieferung von Leistung zur Wiederaufladung der wiederaufladbaren Leistungsversorgung (23) in der Abtasteinheit (10).

21. System nach Anspruch 19 oder 20, wobei die Mittel zur Betätigung der Wiederauflademittel darauf ansprechen, daß die Abtasteinheit (10) an der Geräteeinheit (11) angebracht sind.

22. System nach Anspruch 19 oder 20, wobei die Wiederauflademittel eine Induktionsspule (52) aufweisen, zum Übertragen von Leistung an die Abtasteinheit (10) durch Induktion.

23. System nach Anspruch 19 oder 20, wobei die Datenübertragungsmittel eine Licht emittierende Diode aufweisen, zur drahtlosen Übertragung der Daten an die Hauptdatenspeichermittel (56).

24. System nach Anspruch 19 oder 20, wobei die Geräteeinheit (11) einen Basisteil aufweist, auf dem die Anschlußeinheit (11) sitzt, und wobei die Mittel zur Aufnahme und zum Tragen der Abtasteinheit (10) bewirken, daß der von der Abtasteinheit (10) emittierte Lichtstrahl in der Datenübertragungsbetriebsart zu einer Bezugsebene benachbart zu dem Basisteil geleitet wird.

## Revendications

1. Système pour lire des symboles (12) d'un code à barres ou analogues, comprenant :
une unité manuelle de balayage (10) située dans un boîtier léger portable, comportant des moyens (18, 19, 37, 42) de détection de symboles pour produire un faisceau laser (17) dirigé vers un symbole (12) devant être lu, et pour recevoir une lumière réfléchie émanant d'un tel symbole (12) pour produire des signaux électriques (43) correspondant à des données représentées par le symbole (12), un dispositif de transfert de données (51) pour transférer les données représentées par le symbole (12) à l'extérieur de l'unité de balayage (10), un dispositif de commande de lecture (20) pour actionner les moyens de détection de symboles (18,19,37,42) pour déclencher la lecture d'un symbole (12); et
une unité formant terminal (11) pouvant agir à distance de l'unité de balayage (10) et comprenant des moyens d'entrée de données pour recevoir les données transférées à partir du dispositif de transfert de données de l'unité de balayage (10);
caractérisé en ce que ladite unité de balayage peut être déconnectée physiquement de ladite unité formant terminal; et en ce qu'il comporte en outre une source d'alimentation (23) pour envoyer une énergie électrique à l'unité de balayage; et en ce que
ledit système peut agir de manière à lire des symboles soit dans un premier mode, dans lequel ladite unité portable de balayage (10) est portée par un utilisateur selon un mode manuel et dans lequel il n'existe aucune liaison physique avec l'unité formant terminal, ou dans un second mode à poste fixe, dans lequel ladite unité de balayage (10) est montée directement dans une position fixe par rapport à ladite unité formant terminal (11) et y est connectée physiquement.

2. Système selon la revendication 1, dans lequel ladite source d'alimentation (23) est rechargeable.

3. Système selon la revendication 1 ou 2, dans lequel ladite unité formant terminal (11) inclut des moyens pour afficher et mémoriser les données transférées à partir de ladite unité de balayage, et des moyens pour recharger ladite source d'alimentation rechargeable (23) de ladite unité de balayage (10) lorsque ladite unité de balayage (10) est placée à proximité de ladite unité formant terminal (11).

4. Système selon l'une quelconque des revendications 1-3, dans lequel lesdits moyens de détection de symboles comprennent des moyens de balayage pour déplacer selon un mouvement de balayage répétitif ledit faisceau laser (17) sur au moins une partie d'un symbole (12) devant être lu.

5. Système selon la revendication 4, dans lequel lesdits moyens de détection de symboles comprennent des moyens photodétecteurs (42) pour détecter au moins une partie de l'intensité variable de la lumière de chaque faisceau laser balayé (17), réfléchie par chaque symbole (12).

6. Système selon la revendication 5, dans lequel lesdits moyens de commande de lecture comprennent des moyens aptes à répondre à une identification avec succès d'un symbole (12) devant être lu pour arrêter l'actionnement des moyens de détection de symboles.

7. Système selon la revendication 1 ou 3, dans lequel ladite unité de balayage (10) inclut en outre des moyens pour mémoriser lesdites données représentant des symboles (12) lus.

8. Système selon la revendication 1 ou 3, dans lequel lesdits moyens de commande de lecture comprennent un interrupteur (20) situé sur le boîtier pour déclencher la lecture de chaque symbole (12) lors de chaque actionnement manuel de l'interrupteur (20) par l'utilisateur.

9. Système selon la revendication 1 ou 3, dans lequel lesdits moyens de commande de lecture incluent des moyens pour indiquer un décodage réussi d'un symbole (12) devant être lu.

10. Système selon la revendication 1 ou 3, dans lequel ladite unité formant terminal (11) comprend un boîtier possédant une fente rectangulaire (14) qui est adaptée pour recevoir ladite unité de balayage (10), ledit boîtier comportant une partie de logement située dans la partie d'extrémité intérieure de ladite unité de balayage (10), ladite première partie d'extrémité incluant lesdites données transférées par ladite unité de balayage (10).

11. Système selon la revendication 10, dans lequel ladite unité formant terminal (11) comprend des moyens formant détecteurs d'objets pour effectuer une détection lorsqu'un objet portant une étiquette (12) à code à barres est déplacée dans le champ de vision desdits moyens de détection de symboles de ladite unité de balayage (10) lorsque ladite unité de balayage (10) est logée dans ladite fente rectangulaire (14).

12. Système selon la revendication 1 ou 3, dans lequel ladite unité formant terminal (11) comprend un boîtier possédant une fente (14) apte à recevoir ladite unité de balayage (10), et des moyens situés dans ladite fente (14) pour transférer des données en direction ou en provenance de ladite unité de balayage (10).

13. Système selon la revendication 12, comprenant des moyens situés dans ladite fente (14) pour transférer une énergie à ladite unité de balayage (10) pour charger une batterie (23) située dans ladite unité de balayage (10).

14. Système tel que défini dans l'une quelconque des revendications précédentes, dans lequel ladite unité formant terminal (11) comprend des moyens pour activer lesdits moyens de commande de lecture de ladite unité de balayage (10) lorsque ladite unité de balayage (10) est placée à proximité de ladite unité formant terminal (11).

15. Système selon la revendication 14, dans lequel ledit premier mode de balayage est un mode d'attente à faible puissance et ledit second mode de balayage est un mode de lecture à puissance élevée.

16. Système selon la revendication 15, dans lequel, dans ledit premier mode de balayage, ledit faisceau laser (17) suit une ligne de balayage possédant une première longueur dans un plan de référence en général perpendiculaire au trajet optique dudit faisceau laser (17), et, dans ledit second mode de balayage, ledit faisceau laser (17) suit une ligne de balayage possédant une seconde longueur supérieure à ladite première longueur.

17. Système selon la revendication 14, dans lequel lesdits moyens de transfert de données réalisent une transmission sans fil de données à ladite unité formant terminal (11).

18. Système selon la revendication 14, dans lequel lesdits moyens de commande de lecture sont activés lorsqu'un objet ayant une caractéristique de lumière réfléchie, qui pourrait être l'indication de la présence d'un symbole (12), est détecté.

19. Système tel que défini dans l'une quelconque des revendications précédentes, dans lequel ladite unité portable de balayage (10) peut fonctionner dans un mode manuel, dans lequel elle est supportée par un utilisateur, pour lire des symboles (12), et dans un mode de transfert de données, ladite unité de balayage (10) comprenant une mémoire locale de données (31) située dans lesdits moyens de logement pour mémoriser les données et/ou des moyens pour déclencher la lecture de chaque symbole (12).

20. Système selon la revendication 19, dans lequel
ladite unité formant terminal (11) est éloignée de ladite unité de balayage (10) lorsque ladite unité de balayage (10) est utilisée dans ledit mode manuel, et est couplée à et supporte ladite unité de balayage (10) lorsque l'unité de balayage (10) est dans ledit mode de transfert de données, et comprenant :
(i) des moyens (56) formant mémoire principale de données, et/ou
(ii) des moyens de rechargement pouvant être actionnés pour recharger la source d'alimentation rechargeable (23); et/ou
(iii) des moyens pour recevoir et supporter ladite unité de balayage (10) sur ladite unité formant terminal (11) dans ledit mode de transfert de données, lesdits moyens de réception et de support comprenant
des moyens de transfert de données pour transférer les données mémorisées dans lesdits moyens locaux de mémorisation de données aux moyens principaux de mémorisation de données dans ladite unité formant terminal (11), et
des moyens pour actionner les moyens de rechargement et délivrer une énergie pour recharger la source d'alimentation rechargeable (23) dans ladite unité de balayage (10).

21. Système selon la revendication 19 ou 20, dans lequel lesdits moyens pour actionner les moyens de rechargement sont aptes à répondre à ladite unité de balayage (10) montée sur l'unité formant terminal (11).

22. Système selon la revendication 19 ou 20, dans lequel lesdits moyens de rechargement comprennent une bobine d'induction (52) pour transférer, par induction, une énergie à ladite unité de balayage (10).

23. Système selon la revendication 19 ou 20, dans lequel lesdits moyens de transfert de données comprennent une diode photoémissive pour une transmission sans fil des données auxdits moyens principaux de mémorisation de données (56).

24. Système selon l'une des revendications 19 ou 20, dans lequel ladite unité formant terminal (11) comprend une partie de base, sur laquelle ladite unité formant terminal (11) est placée, et lesdits moyens de réception et de support de l'unité de balayage (10) agissent de manière à diriger le faisceau de lumière émis par ladite unité de balayage (10) dans le mode de transfert de données à un plan de référence adjacent à ladite partie de base.
